# FASCICULE DE BREVET EUROPEEN

(11) **EP 2 715 244 B1**
(45) Date de publication et mention de la délivrance du brevet: **23.09.2015**
(21) Numéro de dépôt: 12724621.3
(22) Date de dépôt: 30.05.2012
(51) Int. Cl.: F24J 2/07, F24J 2/16, F24J 2/46

(54) **RECEPTEUR POUR CENTRALE SOLAIRE A DUREE DE VIE ALLONGEE**
SOLARKRAFTWERKEMPFÄNGER MIT LÄNGERER LEBENSDAUER
LONGER LIFE SOLAR POWER PLANT RECEIVER

(30) Priorité: 31.05.2011 FR 1154769
(43) Date de publication de la demande: 09.04.2014
(73) Titulaire: Commissariat à l'Énergie Atomique et aux Énergies Alternatives, 75015 Paris (FR)
(72) Inventeur: COUTURIER, Raphaël, F-38360 Sassenage (FR); FLEURY, Gatien, F-38000 Grenoble (FR); BREGEARD, Etienne, F-66680 Canohes (FR); BRUCH, Arnaud, F-38100 Grenoble (FR)
(74) Mandataire: Ahner, Philippe
(86) Numéro de dépôt international: PCT/EP2012/060134
(87) Numéro de publication internationale: WO 2012/163962

(56) Documents cités:
- FR-A1- 2 458 032
- US-A1- 2009 056 699

## Description

### DOMAINE TECHNIQUE ET ART ANTÉRIEUR

La présente invention se rapporte à un récepteur solaire pour centrale solaire à durée de vie allongée et à une centrale solaire à concentration de type Fresnel comportant au moins un tel récepteur.

La technologie solaire thermique à concentration consiste à utiliser le rayonnement solaire pour chauffer un fluide caloporteur servant de source chaude dans un cycle thermodynamique. La concentration permet d'atteindre des températures plus ou moins élevées et ainsi de bénéficier de rendements de conversion thermodynamiques plus ou moins importants. Les technologies développées se distinguent par leur moyens de concentration des rayons solaires mis en oeuvre, par les moyens de transport de la chaleur, et éventuellement de stockage de la chaleur qui sont utilisés, i.e. le fluide caloporteur utilisé et des moyens de conversion thermodynamique qui sont par exemple des turbines à vapeur, des turbines à gaz ou des moteurs Stirling.

Il existe typiquement quatre familles de systèmes solaires à concentration ("Concentrating Solar Power" ou CSP en anglais) :
- les collecteurs cylindro-paraboliques à foyer linéaire,
- les concentrateurs linéaires de Fresnel,
- les systèmes à tour à récepteur central, et
- les paraboles à foyer mobile.

Chaque système solaire à concentration comporte un récepteur solaire ayant pour fonction de transférer à un fluide, tel que l'eau, l'huile ou un gaz, la chaleur du rayonnement solaire. Ce récepteur solaire forme donc un échangeur de chaleur. Cet échangeur est formé d'un ou de plusieurs tubes placés en parallèle dans lesquels circule le fluide caloporteur.

Dans le cas particulier d'une centrale solaire à concentration de type Fresnel, le récepteur solaire reçoit les rayons lumineux réfléchis par des miroirs et les transmet au fluide caloporteur sous forme de chaleur.

Un récepteur solaire comporte typiquement :
- un absorbeur qui reçoit le flux solaire sur sa face inférieure et dans lequel circule le fluide caloporteur, par exemple de l'huile ou de la vapeur d'eau, l'absorbeur peut être formé par exemple d'un ou plusieurs tubes juxtaposés dans lesquels circule un caloporteur,
- éventuellement une couche d'un matériau isolant thermique permettant de limiter les pertes thermiques depuis l'absorbeur vers l'extérieur,
- éventuellement un panneau vitré permettant d'isoler l'absorbeur du milieu extérieur et délimitant une cavité fermée entre l'absorbeur et la vitre.

Le récepteur solaire est suspendu par une structure métallique au-dessus des miroirs.

Le flux solaire réfléchi par les miroirs peut ne pas être correctement orienté et/ou focalisé par rapport à l'absorbeur et la tâche solaire concentrée peut alors éclairer une partie de la structure métallique, au lieu de n'éclairer que l'absorbeur. Ce défaut de focalisation peut induire un différentiel de dilatation au sein de la structure qui peut engendrer des contraintes mécaniques par exemple en flexion et en torsion, des concentrations de contraintes et une diminution des caractéristiques des matériaux au niveau des parties chaudes. En effet, il a été estimé qu'une élévation de la température de 300°C environ pouvait survenir sur la structure porteuse, ce qui entraîne une dilatation de 5 mm/m dans le cas d'une structure en acier. Cette déformation par dilatation est donc préjudiciable à l'intégrité de l'ensemble, d'autant plus lorsque que la dilatation n'est pas symétrique.

Le document US2009/0056703 décrit une centrale solaire de type Fresnel comportant un récepteur formé par un absorbeur et une structure porteuse rigide. En cas de défaut de focalisation du flux solaire réfléchi, la structure porteuse est exposée au flux solaire concentré et est susceptible de se déformer et de s'endommager. En outre, l'échauffement de l'absorbeur échauffe également la structure porteuse.

### EXPOSÉ DE L'INVENTION

C'est par conséquent un but de la présente invention d'offrir un récepteur solaire offrant une bonne tenue mécanique à l'échauffement.

Le but précédemment énoncé est atteint par un récepteur solaire comportant un absorbeur, une structure porteuse destinée à permettre de suspendre le récepteur au-dessus des miroirs et une structure pour protéger la structure porteuse du flux solaire et pour supporter l'absorbeur. La structure porteuse est mécaniquement indépendante dans une direction longitudinale de la structure de protection. En outre, la structure porteuse est peu soumise à l'échauffement dû au flux solaire. Ainsi la structure porteuse se dilate peu et la dilatation différentielle entre la structure porteuse et la structure de protection n'est pas susceptible d'endommager le récepteur.

En d'autres termes, on dissocie mécaniquement les fonctions de support du récepteur et de support de l'absorbeur et on protège les moyens formant support d'un échauffement dommageable, ce qui évite une déformation excessive de ceux-ci par dilatation thermique.

Avantageusement, l'absorbeur et la structure de protection sont mécaniquement indépendants dans une direction longitudinale de la structure de protection.

Préférentiellement, un isolant thermique est disposé dans la structure de protection entre la poutre et l'absorbeur.

Avantageusement, le récepteur comporte des écrans radiatifs de part et d'autre de l'absorbeur sur la structure de protection, rendant le récepteur peu sensible aux défauts de focalisation du flux solaire concentré.

La présente invention a alors pour objet un récepteur solaire d'axe longitudinal comportant un absorbeur, une structure porteuse s'étendant sur toute la longueur du récepteur solaire et destinée à suspendre le récepteur dans la centrale, une structure de protection montée autour de la structure porteuse formant une enveloppe autour de la structure porteuse, ladite structure de protection étant apte à protéger la structure porteuse de l'échauffement dû au flux solaire, la structure porteuse et la structure de protection étant aptes à coulisser l'une par rapport à l'autre le long de l'axe longitudinal, l'absorbeur s'étendant longitudinalement.

Avantageusement, la structure de protection et l'absorbeur sont aptes à coulisser l'un par rapport à l'autre le long de la direction longitudinale.

Par exemple, la structure porteuse comporte une poutre ou plusieurs éléments de poutres fixés les uns aux autres.

La structure de protection thermique peut comporter une coque externe et une coque interne délimitant un espace pour la structure porteuse, un isolant thermique étant disposé dans ledit espace autour de la structure porteuse de sorte à isoler thermiquement la structure porteuse.

De manière préférentielle, un isolant thermique est disposé entre la coque interne et la structure porteuse. Par exemple, il s'agit de laine de roche ou de laine de verre.

Avantageusement, le récepteur peut comporter des nervures de rigidification fixées dans la coque externe, lesdites nervures reposant sur la structure porteuse. La coque interne peut alors être solidarisée aux nervures.

Avantageusement, la structure porteuse comporte un revêtement offrant un coefficient de frottement réduit par rapport aux nervures, par exemple en nitrure de bore.

Dans un exemple de réalisation, la coque interne délimite un logement recevant l'absorbeur, ledit absorbeur reposant sur des axes transversaux, chaque axe transversal étant fixé sur deux montants latéraux d'une nervure, l'absorbeur étant ainsi libre de coulisser le long de l'axe longitudinal par rapport à la structure protection thermique.

La coque interne peut être formée de modules de longueur inférieure à celle de la coque externe, les modules se chevauchant au niveau de leurs extrémités longitudinales.

Par exemple, le matériau d'isolation thermique est formé de blocs solides montés entre les nervures, par exemple en laine de roche ou en laine de verre.

Avantageusement, le récepteur solaire comporte des écrans radiatifs solidaires de la coque interne et recouvrant les bords latéraux de la structure de protection thermique. Les écrans radiatifs sont par exemple d'un seul tenant avec la coque interne.

Dans un exemple de réalisation, les écrans radiatifs présentent leurs deux surfaces libres pour le refroidissement par convection. Les écrans radiatifs peuvent comporter une pluralité de trous traversants.

Le récepteur solaire peut comporter une vitre de protection en amont de l'absorbeur dans le sens du flux solaire réfléchi. La vitre de protection est avantageusement en appui contre la coque interne et est maintenue sur la structure de protection thermique par déformation de la coque interne.

La coque interne est avantageusement solidarisée aux nervures par déformation de ces dernières.

La présente invention a également pour objet une centrale solaire du type Fresnel comportant :
- un récepteur selon l'invention,
- un châssis auquel est suspendu ledit récepteur au-dessus de miroirs,
- des moyens de suspension, tels que des câbles, reliant la structure porteuse du châssis,
- un circuit d'alimentation en caloporteur " froid " connecté à une entrée de l'absorbeur, et
- un circuit de collecte du caloporteur " chaud " connecté à une sortie de l'absorbeur.

### BRÈVE DESCRIPTION DES DESSINS

La présente invention sera mieux comprise à l'aide de la description qui va suivre et des dessins en annexes, sur lesquels :
- la figure 1 est une vue en coupe transversale d'un exemple de réalisation d'un récepteur selon la présente invention ;
- la figure 2A est une représentation en perspective du récepteur de la figure 1, l'absorbeur ayant été retiré ;
- la figure 2B est une vue agrandie d'un détail de la figure 2A ;
- les figures 3A, 3B, 3B', 3C et 3D sont des représentations en perspective de différentes étapes de fabrication du récepteur de la figure 1 ;
- la figure 4 est une vue en perspective schématique d'un exemple de centrale solaire dans laquelle un récepteur selon la présente invention peut être mis en oeuvre.

### EXPOSÉ DÉTAILLÉ DE MODES DE RÉALISATION PARTICULIERS

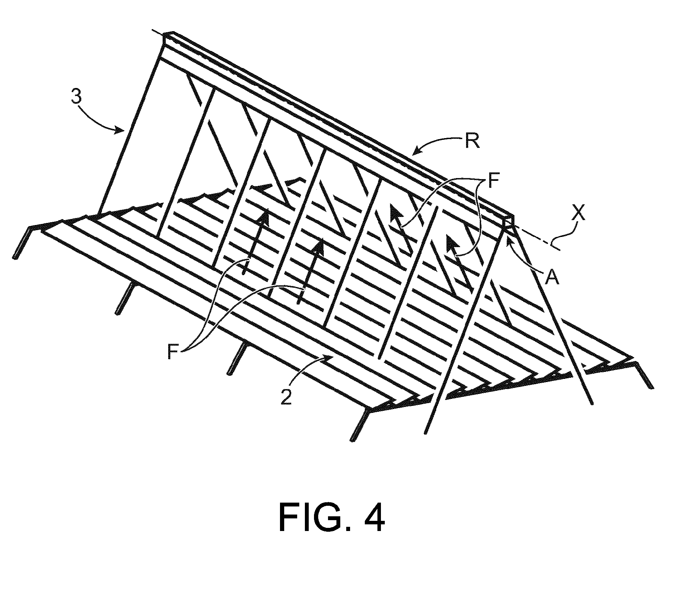

Sur la figure 4, on peut voir un exemple de réalisation d'une centrale solaire de type Fresnel.

La centrale solaire comporte un récepteur R, des miroirs 2 pour réfléchir les rayons solaires vers un absorbeur A disposé dans le récepteur R, un système d'alimentation (non représenté) du récepteur en caloporteur " froid ", un système de collecte (non représenté) du caloporteur " chaud " en sortie du récepteur et des moyens de conversion thermodynamique (non représentés) qui incluent par exemple des turbines à vapeur, des turbines à gaz... La centrale et le récepteur solaire s'étendent le long d'un axe longitudinal X.

Le récepteur solaire R est suspendu au-dessus des miroirs 2. Ceux-ci réfléchissent et concentrent le rayonnement solaire en direction du récepteur solaire R, plus spécifiquement en direction d'un absorbeur A. Les miroirs 2 peuvent être orientables par rapport au sol de sorte à pouvoir orienter le flux solaire F en direction du récepteur.

Le récepteur R peut comporter une pluralité d'éléments connectés les uns aux autres le long de l'axe longitudinal X. Par exemple, il s'agit d'éléments de récepteur mesurant 5 mètres de longueur.

Le récepteur R est suspendu au-dessus des miroirs par l'intermédiaire d'un moyen 3, dans l'exemple représenté il s'agit d'un châssis 3, à une hauteur comprise par exemple entre 7 m et 15 m.

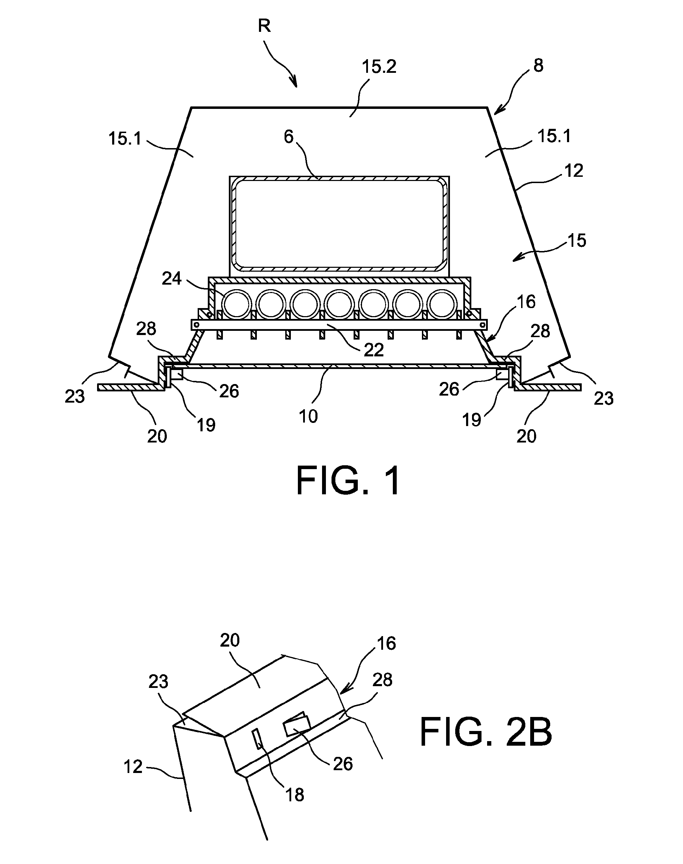

Sur la figure 1, on peut voir une vue en coupe transversale d'un récepteur solaire R selon la présente invention.

Le récepteur R comporte une structure porteuse destinée à permettre la suspension du récepteur R au châssis 3, qui peut être rigide ou formé par des câbles de suspension. La structure porteuse est formée par une poutre 6 s'étendant selon l'axe X. Des moyens (non représentés) de suspension de la poutre 6 au châssis sont prévus. Lesdits moyens peuvent laisser libre le mouvement de la poutre par rapport au châssis.

Le récepteur comporte également l'absorbeur A et une structure de protection 8 qui permet de protéger la structure porteuse contre le flux solaire.

Dans l'exemple représenté le récepteur R comporte une vitre 10 s'interposant entre l'absorbeur A et les miroirs 2 et protégeant ceux-ci des éléments extérieurs.

Nous allons maintenant décrire en détail les différents éléments du récepteur.

La structure de protection 8 comporte une coque externe 12 destinée à reposer sur la poutre et une coque interne 16 destinée à reposer sous la poutre 6.

La coque externe 12 comporte un fond 12.1 et deux parois latérales 12.2 délimitant un canal d'axe longitudinal X. Dans l'exemple représenté, les parois latérales 12.2 sont inclinées définissant un canal évasé.

La coque externe 12 est par exemple en acier inoxydable ou en acier traité contre la corrosion, par exemple par un zingage. En effet, la coque externe 12 subissant les intempéries, il est préférable qu'elle soit protégée de la corrosion. La coque externe 12 a par exemple une épaisseur de 1 à 5 mm, de préférence entre 2 et 3 mm.

A l'intérieur de la coque externe 12, sont prévues des nervures 15 solidarisées au fond 12.1 et aux parois latérales 12.2 afin de rigidifier la coque externe 12. Les nervures 15 sont de préférence réparties de manière régulière le long de l'axe X. Les nervures 15 sont par exemple soudées sur le fond 12.1 et les parois latérales 12.2. Elles peuvent également être fixées par rivetage ou encliquetage sur la coque externe 12. Les nervures 15 sont disposées dans des plans orthogonaux à l'axe X.

Les nervures peuvent être réalisées en acier inoxydable, en acier galvanisé... De préférence, elles sont réalisées dans le même matériau que la coque externe.

En variante, il pourrait être envisagé que les nervures soient venues directement de matière avec la coque externe, par exemple par emboutissage.

Les nervures 15 comportent deux montants latéraux 15.1 reliées par une traverse 15.2, formant un U. Le profil extérieur des nervures 15 correspond au profil intérieur de la coque externe 12. Dans l'exemple représenté, les bords extérieurs des montants latéraux 15.1 sont inclinés.

Le profil intérieur des nervures 15 est tel qu'il correspond au profil extérieur de la poutre 6. Dans l'exemple représenté, la poutre 6 a une section rectangulaire, le profil intérieur des nervures 15 est également rectangulaire. Les dimensions du profil intérieur de nervures 15 sont telles qu'un coulissement libre entre la poutre 6 et les nervures 15 est possible de sorte à assurer un degré de liberté en translation le long de l'axe X entre la poutre 6 et la structure de protection. L'ensemble des nervures 15 définit donc un logement longitudinal pour la poutre 6.

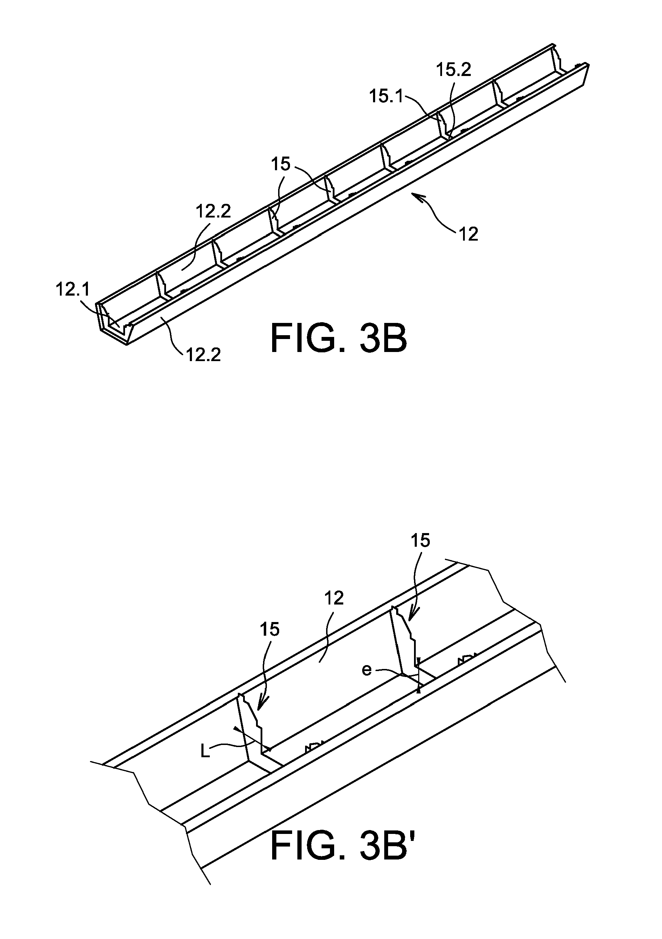

Comme on peut le voir sur la figure 3B', les bords intérieurs des montants latéraux 15.1 comportent également avantageusement des découpes pour former des appuis et/ou zones de fixation pour les différents éléments montés dans la coque externe 12.

La structure de protection comporte également un matériau d'isolation thermique 17 disposé dans la coque externe 12 entre les nervures 15. Dans l'exemple représenté, ce matériau 17 est formé par des modules indépendants montés entre chaque paire de nervures 15 et remplissant l'espace entre deux nervures 15.

Par exemple, l'isolant thermique peut être sous forme de nappes de fibre de céramique, par exemple de la laine de verre ou la laine de roche ou tout autre matériaux adapté à la gamme de température concernée.

En variante, il peut être sous forme de brique ayant une forme correspondante à la forme intérieure du canal, les briques étant fabriquées par moulage ou usinage.

L'épaisseur de l'isolant thermique 17 est inférieure à l'épaisseur e du fond 15.1 de la nervure 15 et la largeur L de ses bords latéraux 15.2 (visibles sur les figures 3B') de sorte que la poutre 6 et les fonds 15.1 des nervures 15 soient en contact.

Au cours du fonctionnement du récepteur, un glissement relatif entre la poutre 6 et les nervures 15 apparaît. De préférence, la poutre 6 reçoit un traitement sur sa face en contact avec le fond des nervures 15 limitant le frottement, par exemple une couche de nitrure de bore ; celui-ci peut être appliqué comme une peinture.

La coque interne 16 de la structure de protection est montée à l'intérieur de la coque externe 12 et délimite avec la coque externe 12 une cavité dans laquelle sont contenus la poutre 6 et l'isolant thermique 17.

La coque interne 16 présente une forme similaire à celle de la coque externe 12 et délimite un logement pour l'absorbeur A destiné à faire face aux miroirs 2.

La coque interne 16 vient en appui contre des découpes faites dans les nervures 15. La position de la coque interne 16 par rapport à la poutre 6 est telle qu'un jeu est ménagé entre la coque interne 16 et la poutre 6, limitant les transferts thermiques. Par exemple l'espace E ainsi délimité est rempli d'air ou alors de préférence d'un matériau d'isolation thermique solide tel que la laine de verre ou la laine de roche.

Cette couche d'isolant thermique présente par exemple une épaisseur de quelques mm, par exemple l'ordre de 2 mm.

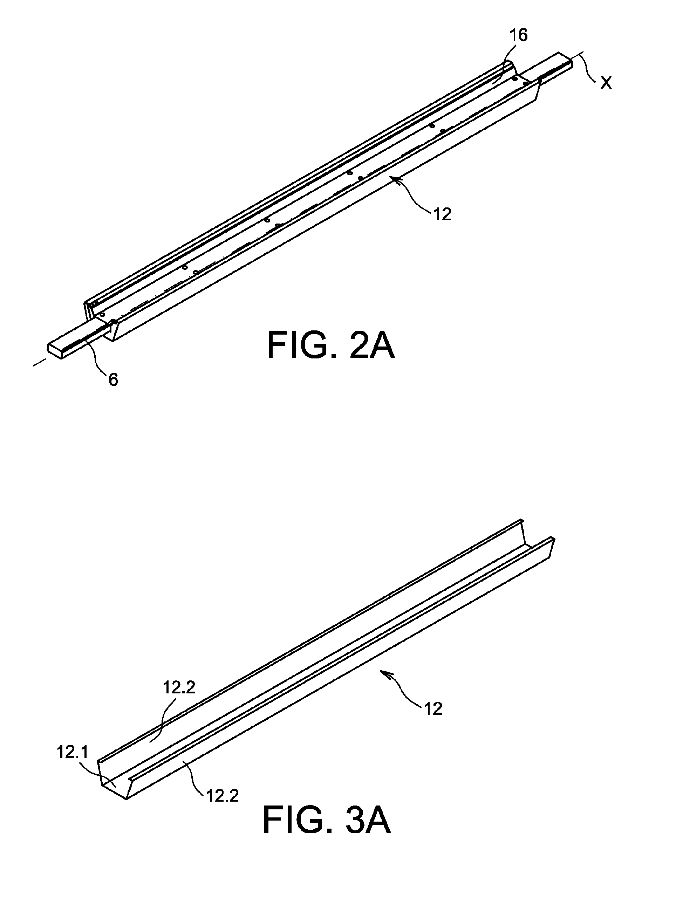

La coque interne 16 est avantageusement fixée sur les nervures 15 comme cela est visible sur la figure 2B qui est une vue agrandie d'un détail de la figure 2. La coque interne 16 comporte des lumières 18 (figure 2B) pour le passage de taquets 19 (figure 1) en saillie des montants latéraux 15.2 des nervures 15. Les taquets 19 sont ensuite pivotés de sorte à former des moyens de retenue de la coque interne 16. Ces moyens de retenue sont de réalisation simple et de prix de revient réduit.

D'autres moyens de retenue sont envisageables par exemple par rivetage.

La coque interne 16 est de préférence en alliage résistant à 300°C, par exemple en acier inoxydable. L'épaisseur de la coque interne 16 est par exemple comprise entre 0,2 mm et 1 mm. La figure 1 n'est pas à l'échelle.

De manière très avantageuse, des écrans radiatifs 20 recouvrent les bords latéraux 23 du récepteur destinés à être du côté des miroirs. Ces écrans 20 sont avantageusement réalisés d'un seul tenant avec la coque interne 16 de part et d'autre du canal qu'elle définit, par pliage des bords latéraux de la tôle formant la coque interne 16. En variante, ceux-ci pourraient être réalisés séparément et fixés sur la structure, par exemple sur la coque externe 12, pour soudage ou rivetage. Avantageusement les écrans radiatifs 20 sont montés de sorte que l'air circule le long des deux faces, améliorant leur refroidissement par convection. On peut prévoir de percer les écrans 20 de trous traversants pour encore améliorer le refroidissement par convection. Par exemple les trous peuvent présenter un diamètre de 1 mm tous les 10 mm.

De préférence, la coque interne 16 est formée de plusieurs modules de longueur faible par rapport à la longueur de la coque externe 12, et sont montées les uns par rapport aux autres de sorte à ce que leurs extrémité longitudinales se chevauchent permettant un déplacement relatif entre les modules sans contraintes en maintenant fermé le volume entre la coque externe 12 et la coque interne 16. En effet, la coque interne 16 est proche de l'absorbeur, celle-ci va donc chauffer et se dilater en conséquence.

L'absorbeur A est monté dans la coque interne avantageusement libre en translation longitudinale par rapport à la structure de protection.

Dans l'exemple représenté des axes transversaux 22 sont fixés par leurs extrémités longitudinales aux nervures 15 comme on peut le voir sur la figure 1. Chaque axe transversal est fixé sur une nervure 15, l'ensemble des axes formant un support pour l'absorbeur. Un axe transversal 22 n'est pas nécessairement fixé sur toutes les nervures.

Dans l'exemple représenté, l'absorbeur est formé d'une pluralité de tubes 24 disposés longitudinalement les uns à côté des autres.

Avantageusement les axes 22 comportent des saillies radiales 21 par exemple sous forme de rondelles, formant deux à deux à deux des logements pour chaque tube.

En variante, l'absorbeur A pourrait comporter un boîtier unique délimitant un ou plusieurs canaux longitudinaux.

La vitre 10 est montée à l'intérieur de la coque interne 16 en amont de l'absorbeur A par rapport au sens du flux solaire réfléchi.

De manière avantageuse, la vitre 10 est maintenue dans la coque interne 16 par des pattes 26 découpées directement dans la coque interne 16 ; les pattes 26 sont ensuite pliées pour faire saillie vers l'extérieur de la coque interne 16 et forment un support pour la vitre 10. Avantageusement, la coque interne 16 comporte deux bords latéraux 28 formant des surfaces d'appui pour la vitre 10. La vitre est alors disposée entre les bords latéraux 28 et les pattes 26.

Ces moyens de fixation sont très simples, très robustes et évitent l'ajout de pièce supplémentaire. Cependant d'autres moyens de fixation sont envisageables, par exemple rapportés sur la coque interne par vissage ou autre.

Dans l'exemple représenté, la poutre 6 a une section rectangulaire. En variante, elle peut présenter une section circulaire, carrée, ou sous forme de poutre en I ou en T ou toute autre section apte à assurer une rigidité en flexion, le support de l'ensemble structure de protection et absorbeur, et le guidage de la coque externe. La poutre est par exemple en acier, par exemple un acier au carbone.

Avantageusement, la poutre comporte un traitement anticorrosion, par exemple un zingage.

Nous allons maintenant décrire la fabrication du récepteur de la figure 1.

Lors d'une première étape, la coque externe 12 est fabriquée par exemple par pliage d'une tôle métallique rectangulaire, comme on peut le voir sur la figure 3A.

Lors d'une étape suivante, les nervures 15 sont fixées à l'intérieur de la coque externe 12, par exemple par soudage sur toute la longueur de celle-ci, comme on peut le voir sur la figure 3B.

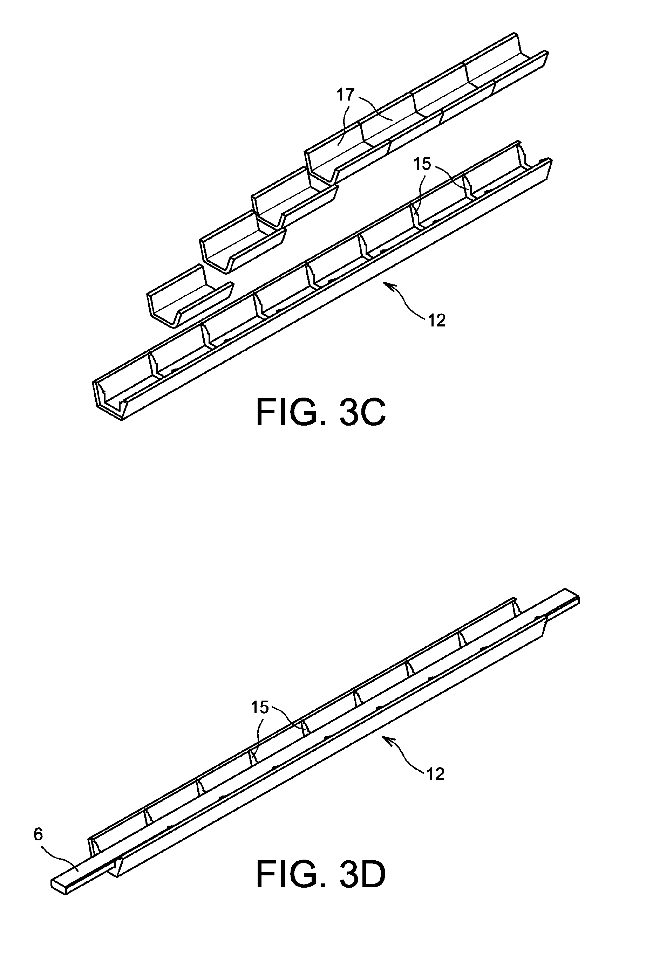

L'isolant thermique 17 est ensuite disposé entre les nervures 15, comme on peut le voir sur la figure 3C.

La poutre 6, éventuellement revêtue d'un traitement limitant le frottement, est alors disposée dans les nervures 15 de sorte à reposer sur le fond de celles-ci, comme cela est représenté sur la figure 3D.

Avantageusement, une couche d'isolant thermique est disposée sur la poutre avant la mise en place de la coque interne 16.

La coque interne 16 est ensuite mise en place sur la poutre 6 et est solidarisée aux nervures 15, comme on peut le voir sur la figure 2A.

Dans le cas où les écrans radiatifs 20 sont distincts de la coque interne 16, ceux-ci sont ensuite montés, par exemple sur la coque interne.

L'absorbeur A est disposé sur la coque interne 16 et les axes transversaux 22 sont fixés sur les nervures 15. La vitre 10 est enfin mise en place en appui sur les bords latéraux 28 de la coque interne 16, et les pattes 26 sont pliées pour former une retenue de la vitre 10.

Comme on peut le constater sur la figure 2B, de manière particulièrement avantageuse, les nervures 15, outre leur fonction de rigidifier la coque externe 12, sont munies de découpes formant des surfaces d'appui pour la structure porteuse, la coque interne 16, et pour la vitre 10 et formant des zones de fixation des axes transversaux 22.

Afin de réaliser une centrale solaire telle que celle représentée sur la figure 4, le récepteur R est suspendu au châssis 3, par exemple au moyen de câbles solidarisés à la structure porteuse, ici la poutre 6 munie de moyen de fixation au châssis de sorte que l'absorbeur soit face aux miroirs 2.

Avantageusement les fixations sont de type étrier et permettent un glissement relatif de la poutre par rapport au châssis selon l'axe X. L'absorbeur A est ensuite raccordé au circuit d'alimentation en caloporteur " froid " et au circuit de collecte en caloporteur " chaud ".

Nous allons maintenant décrire le comportement du récepteur lors du fonctionnement de la centrale solaire.

En fonctionnement, le rayonnement solaire est réfléchi par les miroirs en direction de l'absorbeur.

Le caloporteur circulant dans les tuyaux est échauffé.

Le flux solaire échauffe également la structure de protection. En revanche la poutre 6, qui est entourée par l'isolant thermique 17 et l'isolant thermique disposé dans l'espace E entre la coque interne 16 et la poutre 6, subit un échauffement lent et relativement limité par rapport au reste de la structure. Elle se déforme donc peu sous l'effet de la chaleur.

En outre, l'isolant thermique limite les fuites de chaleur vers l'extérieur de l'absorbeur A.

L'efficacité de l'échauffement est donc améliorée.

Par ailleurs, du fait du degré de liberté longitudinal entre la structure de protection et la poutre 6, cette différence d'échauffement et de déformation par dilatation thermique n'impose pas de contrainte au récepteur, la structure de protection et la poutre peuvent se déformer séparément. De plus, grâce au degré de liberté longitudinal entre la structure de protection et l'absorbeur, une déformation différentielle est possible.

Les écrans radiatifs 20 limitent en outre l'échauffement de la coque externe 12 et protègent la coque externe 12 en cas de défaut de focalisation du rayonnement solaire réfléchi, évitant des déformations différentielle entre les zones gauche et droite de la structure de protection dans la représentation de la figure 1.

La coque externe 12 protège en outre le récepteur des intempéries, comme la pluie, le vent, le sable et le soleil.

Généralement, un récepteur solaire est réalisé en plusieurs parties assemblées les unes aux autres pour réaliser des central solaire de plusieurs centaines de mètres de long. Les poutres sont alors assemblés bout à bout.

A titre d'exemple, la coque externe 12 présente une longueur de quelques mètres par exemple 5 m, elle peut également être formée d'éléments de longueur plus petite reliés par raboutage et éclissage, par exemple des éléments de 1 m à 2,5 m.

Les modules de la coque interne ont par exemple une longueur comprise entre 1 m à 3 m.

Grâce à l'invention, la structure porteuse est découplée des autres éléments du récepteur soumis au flux solaire, tels que l'absorbeur, et les coques externe et interne en cas d'erreur de focalisation du flux réfléchi. Les déformations induites par l'échauffement des parties métalliques sont limitées et n'entraînent pas d'endommagement des éléments du récepteur. Le récepteur offre une durée de vie allongée, les besoins en maintenance sont réduits. Le fonctionnement et l'exploitation d'une centrale solaire équipée de tels récepteurs sont donc plus économiques.

Par ailleurs, la fabrication des récepteurs selon la présente invention met en oeuvre des éléments de fourniture courante et assemblés selon des techniques simples. Un certain nombre d'étapes peut alors être automatisé. Ces avantages sont particulièrement intéressants dans le cas de fabrication de récepteurs de très grande longueur.

Les récepteurs peuvent donc être facilement réalisés et utilisés dans des pays offrant un fort potentiel solaire mais peu industrialisés.

## Revendications

1. Récepteur solaire d'axe longitudinal (X) comportant un absorbeur (A), une structure porteuse (6) s'étendant sur toute la longueur du récepteur solaire et destinée à suspendre le récepteur dans une centrale solaire, une structure de protection (8) montée autour de la structure porteuse (6) formant une enveloppe autour de la structure porteuse, ladite structure de protection (8) étant apte à protéger la structure porteuse (6) de l'échauffement dû au flux solaire, la structure porteuse (6) et la structure de protection (8) étant aptes à coulisser l'une par rapport à l'autre le long de l'axe longitudinal, l'absorbeur (A) s'étendant longitudinalement.

2. Récepteur solaire selon la revendication 1, dans lequel la structure de protection (8) et l'absorbeur (A) sont aptes à coulisser l'un par rapport à l'autre le long de la direction longitudinale.

3. Récepteur solaire selon la revendication 1 ou 2, dans lequel la structure porteuse (6) comporte une poutre (6) ou plusieurs éléments de poutres fixés les uns aux autres.

4. Récepteur solaire selon la revendication 1, 2 ou 3, dans lequel la structure de protection thermique (8) comporte une coque externe (12) et une coque interne (16) délimitant un espace pour la structure porteuse, un isolant thermique (17) étant disposé dans ledit espace autour de la structure porteuse (6).

5. Récepteur solaire selon la revendication 4, dans lequel un isolant thermique est disposé entre la coque interne (16) et la structure porteuse (6).

6. Récepteur solaire selon la revendication 4 ou 5, comportant des nervures (15) de rigidification fixées dans la coque externe (12), lesdites nervures (15) reposant sur la structure porteuse (6) l'isolant thermique (17)étant avantageusement formé de blocs solides montés entre les nervures (15), par exemple en laine de roche ou en laine de verre.

7. Récepteur solaire selon la revendication 6, dans lequel la coque interne (16) est solidarisée aux nervures (15).

8. Récepteur solaire selon la revendication 6 ou 7, dans lequel la structure porteuse (6) comporte un revêtement offrant un coefficient de frottement réduit par rapport aux nervures (15), par exemple en nitrure de bore.

9. Récepteur solaire selon l'une des revendications 1 à 8 en combinaison avec la revendication 6, dans lequel la coque interne (16) délimite un logement recevant l'absorbeur (A), ledit absorbeur (A) reposant sur des axes transversaux (22), chaque axe transversal (22) étant fixé sur deux montants latéraux (15.2) d'une nervure (15), l'absorbeur (A) étant libre de coulisser le long de l'axe longitudinal (X) par rapport à la structure protection thermique (8).

10. Récepteur solaire selon l'une des revendications 4 à 9, dans lequel la coque interne (16) est formée de modules de longueur inférieure à celle de la coque externe (12), lesdits modules se chevauchant au niveau de leurs extrémités longitudinales.

11. Récepteur solaire selon l'une des revendications 4 à 10, comportant des écrans radiatifs (20) solidaires de la coque interne (16) et recouvrant les bords latéraux de la structure de protection thermique (8), les écrans radiatifs (20) étant avantageusement d'un seul tenant avec la coque interne (16).

12. Récepteur solaire selon la revendication 11, dans lequel les écrans radiatifs (20) présentent des surfaces libres pour le refroidissement par convection et/ou une pluralité de trous traversants.

13. Récepteur solaire selon l'une des revendications 1 à 12, comportant une vitre de protection (10) en amont de l'absorbeur (A) dans le sens du flux solaire réfléchi, la vitre de protection (10) étant avantageusement en appui contre la coque interne (16) et étant maintenue sur la structure de protection thermique (8) par déformation de la coque interne (16).

14. Récepteur solaire selon l'une des revendications 6 à 13, dans lequel la coque interne (16) est solidarisée aux nervures (15) par déformation de ces dernières.

15. Centrale solaire du type Fresnel comportant :
- un récepteur selon l'une des revendications 1 à 14,
- un châssis (3) auquel est suspendu ledit récepteur au-dessus de miroirs (2),
- des moyens de suspension, tels que des câbles, reliant la structure porteuse du châssis,
- un circuit d'alimentation en caloporteur " froid " connecté à une entrée de l'absorbeur, et
- un circuit de collecte du caloporteur " chaud " connecté à une sortie de l'absorbeur.

## Patentansprüche

1. Solarempfänger mit einer Längsachse (X), enthaltend einen Absorber (A), eine Tragstruktur (6), die sich über die gesamte Länge des Solarempfängers erstreckt und dazu bestimmt ist, den Empfänger in einem Solarkraftwerk aufzuhängen, eine Schutzstruktur (8), die um die Tragstruktur (6) herum angebracht ist und eine Hülle um die Tagstruktur herum bildet, wobei die Schutzstruktur (8) dazu geeignet ist, die Tragstruktur (6) vor der Erwärmung aufgrund der Sonneneinstrahlung zu schützen, wobei die Tragstruktur (6) und die Schutzstruktur (8) dazu geeignet sind, sich entlang der Längsachse zueinander zu verschieben, wobei der Absorber (A) sich longitudinal erstreckt.

2. Solarempfänger nach Anspruch 1, wobei die Schutzstruktur (8) und der Absorber (A) dazu geeignet sind, sich in Längsrichtung zueinander zu verschieben.

3. Solarempfänger nach Anspruch 1 oder 2, wobei die Tragstruktur (6) eine Stütze (6) oder mehrere Stützelement aufweist, die aneinander befestigt sind.

4. Solarempfänger nach Anspruch 1, 2 oder 3, wobei die die Wärmeschutzstruktur (8) eine Außenschale (12) und eine Innenschale (16) aufweist, die einen Raum für die Tragstruktur eingrenzen, wobei ein Wärmedämmstoff (17) in dem Raum um die Tragstruktur (6) herum angeordnet ist.

5. Solarempfänger nach Anspruch 4, wobei eine Wärmedämmstoff zwischen der Innenschale (16) und der Tragstruktur (6) angeordnet ist.

6. Solarempfänger nach Anspruch 4 oder 5, enthaltend Versteifungsrippen (15), die in der Außenschale (12) befestigt sind, wobei die Rippen (15) auf der Tragstruktur (6) aufliegen, wobei der Wärmedämmstoff (17) vorteilhaft aus festen Blöcken gebildet ist, die zwischen den Rippen (15) gelagert sind, beispielweise aus Steinwolle oder aus Glaswolle.

7. Solarempfänger nach Anspruch 6, wobei die Innenschale (16) fest mit den Rippen (15) verbunden ist.

8. Solarempfänger nach Anspruch 6 oder 7, wobei die Tragstruktur (6) eine Verkleidung aufweist, die einen gegenüber den Rippen (15) verminderten Reibungskoeffizienten bietet und beispielsweise aus Bornitrid besteht.

9. Solarempfänger nach einem der Ansprüche 1 bis 8 in Kombination mit Anspruch 6, wobei die Innenschale (16) eine den Absorber (A) aufnehmende Aufnahmeausnehmung eingrenzt, wobei der Absorber (A) auf Querachsen (22) aufliegt, wobei jede Querachse (22) an zwei Längsträgern (15.2) einer Rippe (15) befestigt ist, wobei der Absorber (A) entlang der Längsachse (X) bezüglich der Wärmeschutzstruktur (8) frei gleitbeweglich ist.

10. Solarempfänger nach einem der Ansprüche 4 bis 9, wobei die Innenschale (16) aus Modulen mit geringerer Länge als die Außenschale (12) gebildet ist, wobei die Module sich im Bereich ihrer Längsenden überlappen.

11. Solarempfänger nach einem der Ansprüche 4 bis 10, enthaltend Strahlungsschirme (20), die fest mit der Innenschale (16) verbunden sind und die Längsränder der Wärmeschutzstruktur (8) abdecken, wobei die Strahlungsschirme (20) vorteilhaft aus einem Stück mit der Innenschale (16) ausgebildet sind.

12. Solarempfänger nach Anspruch 11, wobei die Strahlungsschirme (20) freie Flächen für die Kühlung durch Konvektion und/oder eine Mehrzahl von durchgängigen Löchern aufweisen.

13. Solarempfänger nach einem der Ansprüche 1 bis 12, enthaltend eine Schutzscheibe (10), die vor dem Absorber (A) in Richtung der reflektierten Sonneneinstrahlung vorgelagert ist, wobei die Schutzscheibe (10) sich vorteilhaft an der Innenschale (16) abstützt und durch Verformung der Innenschale (16) an der Wärmeschutzstruktur (8) gehalten wird.

14. Solarempfänger nach einem der Ansprüche 6 bis 13, wobei die Innenschale (16) fest mit den Rippen (15) durch Verformung der letztgenannten verbunden ist.

15. Sonnenkraftwerk vom Typ Fresnel, enthaltend:
- einen Empfänger nach einem der Ansprüche 1 bis 14,
- ein Gestell (3), an dem der Empfänger oberhalb von Spiegeln (2) aufgehängt ist,
- Aufhängungsmittel, wie etwa Seile, welche die Tragstruktur mit dem Gestell verbinden,
- einen Kreislauf zum Versorgen mit "kaltem" Wärmeträgerfluid, der mit einem Einlass des Absorbers verbunden ist, und
- einen Kreislauf zum Sammeln des "heißen" Wärmeträgerfluids, der mit einem Auslass des Absorbers verbunden ist.

## Claims

1. Solar receiver with a longitudinal axis (X) comprising an absorber (A), a bearing structure (6) extending over the entire length of the solar receiver and intended to suspend the receiver in the power plant, a protection structure (8) mounted around the bearing structure (6) forming an envelope around the bearing structure, said protection structure (8) being able to protect the bearing structure (6) from the heating due to the solar flux, the bearing structure (6) and the protection structure (8) being able to slide with respect to each other along the longitudinal axis, the absorber (A) extending longitudinally.

2. Solar receiver according to claim 1, wherein the protection structure (8) and the absorber (A) are able to slide with respect to each other along the longitudinal direction.

3. Solar receiver according to claim 1 or 2, wherein the bearing structure (6) comprises a beam (6) or several beam elements fixed to one another.

4. Solar receiver according to claim 1, 2 or 3, wherein the thermal protection structure (8) comprises an external shell (12) and an internal shell (16) delimiting a space for the bearing structure, thermal insulation (17) being disposed in said space around the bearing structure (6).

5. Solar receiver according to claim 4, wherein a thermal insulation is disposed between the internal shell (16) and the bearing structure (6).

6. Solar receiver according to claim 4 or 5, comprising stiffening ribs (15) fixed in the external shell (12), said ribs (15) resting on the bearing structure (6), the thermal insulation material (17) being advantageously formed from solid blocks mounted between the ribs (15), for example rockwool or glass wool.

7. Solar receiver according to claim 6, wherein the internal shell (16) is secured to the ribs (15) .

8. Solar receiver according to claim 6 or 7, wherein the bearing structure (6) comprises a cladding offering a reduced coefficient of friction compared with the ribs (15), for example made from boron nitride.

9. Solar receiver according to one of claims 1 to 8 in combination with claim 6, wherein the internal shell (16) delimits a housing receiving the absorber (A), said absorber (A) resting on transverse axes (22), each transverse axe (22) being fixed to two lateral uprights (15.2) of a rib (15), the absorber (A) being free to slide along the longitudinal axis (X) with respect to the thermal protection structure (8).

10. Solar receiver according to one of claims 4 to 9, wherein the internal shell (16) is formed by modules with a length less than that of the external shell (12), said modules overlapping at their longitudinal ends.

11. Solar receiver according to one of claims 4 to 10, comprising radiative screens (20) secured to the internal shell (16) and covering the lateral edges of the thermal protection structure (8), the radiative screens (20) being advantageously in a single piece with the internal shell (16).

12. Solar receiver according to claim 11, wherein the radiative screens (20) have free surfaces for cooling by convection or/and a plurality of through holes.

13. Solar receiver according to one of claims 1 to 12, comprising a protective glazing (10) upstream of the absorber (A) in the direction of the reflected solar flux, the protective glazing (10) being advantageously in abutment against the internal shell (16) and being held on the thermal protection structure (8) by deformation of the internal shell (16).

14. Solar receiver according to one of claims 6 to 13, wherein the internal shell (16) is secured to the ribs (15) by deformation of the latter.

15. Solar power plant of the Fresnel type, comprising:
- a receiver according to one of claims 1 to 14,
- a frame (3) from which said receiver is suspended above mirrors (2),
- suspension means, such as cables, connecting the bearing structure of the frame,
- a circuit supplying "cold" heat transfer substance to an inlet of the absorber, and
- a circuit for collecting the "hot" heat transfer substance connected to an outlet of the absorber.
